# EUROPEAN PATENT APPLICATION

(11) **EP 0 765 922 A1**
(43) Date of publication of application: **02.04.1997**
(21) Application number: 96114755.0
(22) Date of filing: 14.09.1996
(51) Int. Cl.: C09D 201/02

(54) **Coatings containing hydrazide compounds for enhanced durability**

(30) Priority: 29.09.1995 US 536576
(71) Applicant: BASF CORPORATION, Mount Olive, New Jersey 07828-1234 (US)
(72) Inventor: Oberg, Patricia K., Birmingham, Michigan 48009 (US); Oberg, David J., Birmingham, Michigan 48009 (US); Boisseau, John E., Bloomfield Hills, Michigan 48302 (US)
(74) Representative: Münch, Volker, Dr.

(57) **Abstract**

A coating composition comprising
a) a polymer having at least one functional group that is reactive with a crosslinking agent;
b) a crosslinking agent;
c) a hydrazide group that is attached to the polymer a), the crosslinking agent b), or part of a compound different from a) or b). Basecoat, clearcoat and
color-plus-clear composite coatings which comprise the above described composition provide good resistance to surface degradation caused by exposure to ultraviolet or visible light, or to severe weathering conditions. Likewise, the coatings demonstrate good retention of distinctness of image (DOI) and gloss upon extended exposure to severe weathering. When the hydrazide compound is utilized in a clearcoat of a color-plus-clear composite coating, good intercoat adhesion was obtained. A method for improving the resistance of a cured film to environmental degedation comprises applying to a substrate a coating composition a basecoat or a clearcoat comprising the above described coating composition.

## Description

### Field of the Invention

The present invention is directed to coating compositions including hydrazide compounds. More specifically the present invention is related to automotive coating compositions containing hydrazide compounds, for enhanced exterior durability, and methods for obtaining cured films demonstrating enhanced durability.

### Background of the Invention

Coatings for automotive applications frequently employ the use of a color plus clear composite coating composition. The color coating composition comprises a pigmented basecoat composition, which may include a crosslinking agent. The clear coat composition is applied over the basecoat composition and may comprise a one component or two component coating composition. The one component coating composition typically includes an aminoplast or blocked isocyanate crosslinking agent. Typically the two component coating composition includes an unblocked isocyanate crosslinking agent.

A color-plus-clear composite film is formed when at least a first layer of a basecoat composition is applied to a subtrate, and a clearcoat composition is applied over the basecoat layer. The layers may be cured simultaneously or sequentially to form a cured film, referred to as a color-plus-clear composite film.

Upon exposure to severe weathering conditions the cured basecoat, clearcoat, or color-plus clear composite films, sometimes exhibit severe surface degradation and delamination problems. While it is well known that ultraviolet radiation causes degradation of cured coating films, testing indicates that even visible light may stimulate the rapid degradation of cured pigmented basecoat compositions.

The present invention is directed to coating compositions which result in cured films demonstrating improved resistance to surface degredation and methods for minimizing surface degradation of cured films, particularly color-plus-clear composite films.

### Summary of the Invention

The present invention is a coating composition comprising
a) a polymer having at least one functional group that is reactive with a crosslinking agent;
b) a crosslinking agent;
c) a hydrazide group that is attached to the polymer a), the crosslinking agent b), or part of a compound different from a) or b).

Another embodiment of the invention relates to a method of preparing a coating where the above described composition is applied to a substrate and baked to form a cured film.

Yet another embodiment of the invention provides for a method of improving resistance of a cured film to surface degedation, comprising coating a substrate with a basecoat or clearcoat comprising the above described coating composition, or forming a color-plus-clear composite film utilizing a clearcoat or a basecoat comprising the above described coating composition.

Basecoat, clearcoat and color-plus-clear composite coatings which comprise the above described composition provide good resistance to surface degradation caused by exposure to ultraviolet or visible light, or to severe weathering conditions. The coatings demonstrate good retention of distinctness of image (DOI) and gloss upon extended exposure to severe weathering. When the hydrazide compound is utilized in a clearcoat of a color-plus-clear composite coating, good intercoat adhesion is obtained.

### Description of the Preferred Embodiment

The coating composition of the present invention comprises a polymer having at least one functional group that is reactive with a crosslinking agent, a suitable crosslinking agent and a hydrazide group that is attached to the polymer, the crosslinker, or a compound different from the polymer or crosslinker. Polymers useful to form the coating composition include for example, acrylic polymers, modified acrylic polymers, polyesters, polyepoxides, polycarbonates, polyurethanes, polyamides, polyimides, polysiloxanes and carbamate polymers.

Where acrylic polymers are utilized, such polymers can be prepared from monomers such as acrylic acid and methacrylic acid, alkyl and cycloalkyl acrylates and methacrylates having 1 to 18, preferably 4 to 13, carbon atoms in the alkyl or cycloalkyl moiety, or mixtures of such monomers. Examples of these include methyl acrylate, methyl methacrylate, ethyl acrylate, ethyl methacrylate, n-butyl acrylate, n-butyl methacrylate, 2-ethylhexyl acrylate, cyclohexyl methacrylate, and 2-ethylhexyl methacrylate.

The reactive functionality on the acrylic polymer may be incorporated by reacting functional monomers having carboxyl, hydroxyl, epoxy, amino, and alkylamino functional groups. Carboxyl containing monomers include acrylic acid, methacrylic acid, crotonic acid, itaconic acid, maleic acid, fumaric acid, 2-acryloxymethoxy-O-phthalic acid, 2-acryloxy-1-methylethoxy-O-hexahydrophthalic acid. Hydroxy functional monomers include 2-hydroxyethyl acrylate, 2-hydroxyethyl methacrylate, hydroxypropyl methacrylate, hydroxy butyl acrylate, hydroxybutyl methacrylate, allyl alcohol, and methallyl alcohol. Epoxy functional monomers include glycidyl methacrylate. Examples of alkylamino acrylates and methacrylates include aminomethyl, aminoethyl, aminopropyl, aminobutyl and aminohexyl acrylates and methacrylates, dimethylaminoethyl acrylate, and dimethylaminoethyl methacrylate. Other suitable monomers include N-alkoxymethylacrylamide monomers such as N-(methoxymethyl)acrylamide, N-(propoxymethyl)acrylamide, N-isopropoxymethyl-acrylamide, and N-(butoxymethyl)acrylamide. Other ethylenically unsaturated monomers such as vinyl, styrene, α-methyl styrene, vinyl toluene, t-butyl styrene may also be included to provide the desired physical characteristics.

Modified acrylics can also be used as the acrylic polymer. Examples of these include polyester-modified acrylics or polyurethane-modified acrylics, as are well known in the art. An example of one preferred polyester-modified acrylic is an acrylic polymer modified with δ-caprolactone. Such a polyester modified acrylic is described in U. S. Patent No. 4,546, 046 to Etxell et al. Polyurethane modified acrylics are well known in the art. An example is set forth in U.S. Patent No. 4, 584, 354, the disclosure of which is hereby incorporated by reference.

Polyesters having hydroxyl groups, acid groups, or amino groups as reactive groups can also be used as the polymer in the composition according to the invention. Such polyesters are well-known in the art, and may be prepared by the polyesterification of organic polycarboxylic acids (e.g. phthalic acid, hexahydrophthalic acid, adipic acid, maleic acid) or their anhydrides with organic polyols containing primary or secondary hydroxyl groups.

Polyurethanes useful as the polymer of the present invention can be prepared by reacting polyisocyanate and polyol with an OH:NCO equivalent ratio of greater than 1:1, to obtain polyurethanes with terminal hydroxyl functionality. In this case capping of the isocyanate occurs simultaneously with the synthesis of the polyurethane resin. Alternatively, polyurethane may be formed by reacting polyisocyanate and polyol with an OH:NCO ratio of less than 1:1. In this case, where excess isocyanate is used, the polyurethane having unreacted isocyanate functionality is then reacted with a capping agent. Suitable capping agents include reactive alcohols or amines. Examples of these are trimethylolpropane, ethanolamine, diethanolamine, Solketal, diols, triols, or a mixture of diols and triols.

In order to form a cured coating, one or more of the polymers as described above are crosslinked utilizing a one-package system or a two-package system. In a one-package system the polymer is combined with a crosslinker to form a stable paint system at storage temperatures. In a two-package system, the polymer and the crosslinker are kept separate until just prior to or upon application of the composition. The crosslinker must have at least two functional sites which are reactive with the polymer, and the crosslinker may be either monomeric or polymeric in nature. Examples of materials used as crosslinkers are aminoplast crosslinkers, polyepoxides, polyacids, polyols, polyisocyanates, and any compatible mixture thereof.

The aminoplast crosslinkers are aldehyde condensation products of melamine, glycoluril, urea, benzoguanamine, or a similar compound. They may be soluble in aqueous or organic solvents. Generally, the aldehyde employed is formaldehyde, although useful products can be made from other aldehydes, such as acetaldehyde, benzaldehyde, and others. Condensation products of melamine or urea are the most common and are preferred, but products of other amines and amides in which at least one amine group is present can also be employed. These aldehyde condensation products contain methylol groups or similar alkylol groups, depending upon the particular aldehyde employed. If desired, these methylol groups can be etherified by reaction with an alcohol. Various alcohols are employed for this purpose, including essentially a monohydric alcohol, although the preferred alcohols are methanol, butanol, and similar lower alkanols having eight carbons or less.

The aminoplast crosslinker can be monomeric or polymeric. One preferred crosslinker which gives a high quality finish is hexamethoxymethyl melamine (available as Cymel 303, sold by American Cyanamid, of Wayne, J.J.), especially for high solids coating compositions. Preferably a polymeric melamine is used as a crosslinker for compositions to be applied over waterborne basecoats. Another useful resin is a methoxy/butoxymethyl melamine (available as Resimene 755 from Monsanto Chemical Co., of Springfield, MA).

Suitable polyisocyanate crosslinkers for use in a two component coating composition according to the present invention include but are not limited to toluene diisocyanate, isocyanurates of toluene diisocyante, diphenylmethane 4,4*'*-diisocyanate, isocyanturates of 4,4*'*-diisocyanate, methylenebis-4,4*'*-isocyanatecyclohexane, 1,6-hexamethylene diisocyanate, isophorone diisocyanate, isocyanurates of isopohorone diisocyanate, 1,4-cyclohexane diisocyanate, p-phenylene diisocyanate, triphenylmethane 4,4*'*,4*''* triisocyanate, tetramethyl xylene diisocyanate, metaxylene diisocyanate, dicyclohexylmethane diisocyanate and 1,3-bis(2-isocyanato-2-propyl)benzene (TMXDI).

Another embodiment of the present invention is a one component coating composition which utilizes an isocyanate crosslinker reacted with one or more dialkyl malonates, acetoacetate or a mixture thereof. The crosslinking reaction using these isocyanate crosslinkers occurs by reaction of the functional groups on the polymer with the diethyl malonate acetoacetate on the crosslinking agent, rather than by reaction of the functional groups on the polymer with isocyanate groups on the crosslinker. The diethyl malonate or acetoacetate group on the crosslinker undergoes a transesterification reaction with the hydroxy, carboxy, epoxy, isocyanate, amino or other functionality on the polymer.

Optimum results are obtained for this embodiment of the invention when at least 50 percent, preferably at least 70 percent, of the isocyanate groups of the polyisocyanate or of the mixture of polyisocyanates are reacted with the malonates, acetoacete, or mixtures thereof. The remaining isocyanate groups are reacted with compounds containing hydroxyl groups which are preferably low molecular weight aliphatic or cycloaliphatic polyols such as neopentyl glycol, dimethylolcyclohexane, ethylene glycol, diethylene glycol, propylene glycol, 2-methyl-2-propylpropane-1,3-diol, 2-ethyl-2-butylpropane-1,3-diol, 2,2,4-trimethyl-pentane-1,5-diol and 2,2,5-trimethylhexane-1,6-diol, or the synthetic resins containing hydroxyl groups which can be employed as polymer (a).

Any polyisocyanates which are used for coatings may be used for the preparation of the isocyanate. However, it is preferred to employ polyisocyanates whose isocyanate groups are attached to aliphatic or cycloaliphatic radicals. Examples of such polyisocyanates are hexamethylene diisocyanate, isophorone diisocyanate, trimethylhexamethylene diisocyanate, dicyclohexylmethane diisocyanate and 1,3-bis(2-isocyanato-2-propyl)benzene (TMXDI) and adducts of these polyisocyanates with polyols, in particular low molecular weight polyols, for example trimethylolpropane, and polyisocyanates which are derived from these polyisocyanates and contain isocyanurate groups and/or biuret groups. Particularly preferred isocyanates include hexamethylene diisocyanate and isophorone diisocyanate, polyisocyanates which are derived from these diisocyanates, contain isocyanurate or biuret groups and which preferably contain more than two isocyanate groups per molecule, and reaction products of hexamethylene diisocyanate and isophorone diisocyanate, or a mixture of hexamethylene diisocyanate and isophorone diisocyanate, containing 0.3 - 0.5 equivalents of a low molecular weight polyol having a molecular weight of from 62 to 500, preferably from 104 to 204, in particular a triol, for example trimethylolpropane.

Examples of dialkyl malonates which can be employed are dialkyl malonates having 1 to 6 carbon atoms in each of the alkyl radicals, for example dimethyl malonate and diethyl malonate, with diethyl malonate being preferably employed.

Preferred acetoacetates are alkyl acetoacetates having 1 to 6 carbon atoms in the alkyl moiety or a mixture of such alkyl acetoacetates.

Another suitable coating composition according to the present invention, includes a carbamate functional polymer, suitable crosslinking agent and a hydrazide group that is attached to the polymer, the crosslinker, or a compound different from the polymer or crosslinker.

Suitable carbamate functional polymers can be prepared from an acrylic monomer having a carbamate functionality in the ester portion of the monomer. Such monomers are well-known in the art and are described, for example in U.S. Patents 3,479,328, 3,674,838, 4,126,747, 4,279,833, and 4,340,497, the disclosures of which are incorporated herein by reference. One method of synthesis involves reaction of a hydroxy ester with urea to form the carbamyloxy carboxylate (i.e., carbamate-modified acrylic). Another method of synthesis reacts an a,b-unsaturated acid ester with a hydroxy carbamate ester to form the carbamyloxy carboxylate. Yet another technique involves formation of a hydroxyalkyl carbamate by reacting a primary or secondary amine or diamine with a cyclic carbonate such as ethylene carbonate. The hydroxyl group on the hydroxyalkyl carbamate is then esterified by reaction with acrylic or methacrylic acid to form the monomer. Other methods of preparing carbamate-modified acrylic monomers are described in the art, and can be utilized as well. The acrylic monomer can then be polymerized along with other ethylenically-unsaturated monomers, if desired, by techniques well-known in the art.

An alternative route for preparing the polymer (a) used in the composition of the invention is to react an already-formed polymer such as an acrylic polymer with another component to form a carbamate-functional group appended to the polymer backbone, as described in U.S. Patent 4,758,632, the disclosure of which is incorporated herein by reference. One technique for preparing polymers useful as component (a) involves thermally decomposing urea (to give off ammonio and HNCO) in the presence of a hydroxy-functional acrylic polymer to form a carbamate-functional acrylic polymer. Another technique involves reacting the hydroxyl group of a hydroxyalkyl carbamate with the isocyanate group of an isocyanate-functional acrylic or vinyl monomer to form the carbamate-functional acrylic. Isocyanate-functional acrylics are known in the art and are described, for example in U.S. Patent 4,301,257, the disclosure of which is incorporated herein by reference. Isocyanate vinyl monomers are well-known in the art and include meta-isocpropenyl-α,α-dimethylbenzyl isocyanate (sold by American Cyanamid as TMI®). Yet another technique is to react the cyclic carbonate group on a cyclic carbonate-functional acrylic with ammonia in order to form the carbamate-functional acrylic. Cyclic carbonate-functional acrylic polymers are known in the art and are described, for example, in U.S. Patent 2,979,514, the disclosure of which is incorporated herein by reference. A more difficult, but feasible way of preparing the polymer would be to trans-esterify an acrylate polymer with a hydroxyalkyl carbamate.

The polymer (a) will generally have a molecular weight of 2000-20,000, and preferably from 4000-6000. Molecular weight can be determined by the GPC method using a polystyrene standard. The carbamate content of the polymer, on a molecular weight per equivalent of carbamate functionality, will generally be between 200 and 500, and preferably between 300 and 350. The glass transition temperature, T_{g}, of component (a) can be adjusted to achieve a cured coating having the T_{g} for the particular application involved. The average T_{g} of unreacted component (a) should be between 10°C and 80°C, with the individual T_{g}'s being adjusted to achieve optimum performance.

The polymer component (a) can be represented by the randomly repeating units according to the following formula:

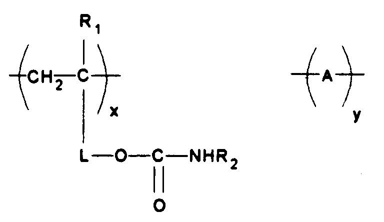

In the above formula, R₁ represents H or CH₃. R2 represents H, alkyl, preferably of 1 to 6 carbon atoms, or cycloalkyl, preferably up to 6 ring carbon atoms. It is to be understood that the terms alkyl and cycloalkyl are to include substituted alkyl and cycloalkyl, such as halogen-substituted alkyl or cycloalkyl. Substituents that will have an adverse impact on the properties of the cured material, however, are to be avoided. For example, ether linkages are thought to be susceptible to hydrolysis, and should be avoided in locations that would place the ether linkage in the crosslink matrix. The values x and y represent weight percentages, with x being 10 to 90 % and preferably 40 to 60 %, and y being 90 to 10 % and preferably 60 to 40 %.

In the formula, A represents repeat units derived from one or more ethylenically unsaturated monomers. Such monomers for copolymerization with acrylic monomers are known in the art. They include alkyl esters of acrylic or methacrylic acid, e.g., ethyl acrylate, butyl acrylate, 2-ethylhexyl acrylate, butyl methacrylate, isodecyl methacrylate, hydroxyethyl methacrylate, hydroxypropyl acrylate, and the like; and vinyl monomers such as meta-isocpropenyl-α,α-dimethylbenzyl isocyanate(sold by American Cyanamid as TMI®), styrene, vinyl toluene and the like.

L represents a divalent linking group, preferably an aliphatic of 1 to 8 carbon atoms, cycloaliphatic, or aromatic linking group of 6 to 10 carbon atoms. Examples of L include 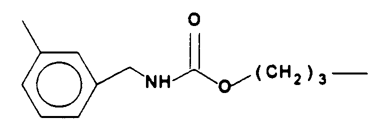 -(CH₂)-, -(CH₂)₂-, -(CH₂)₄-, and the like. In one preferred embodiment, -L- is represented by -COO-L'- where L' is a divalent linking group. Thus, in a preferred embodiment of the invention, the polymer component (a) is represented by randomly repeating units according to the following formula:

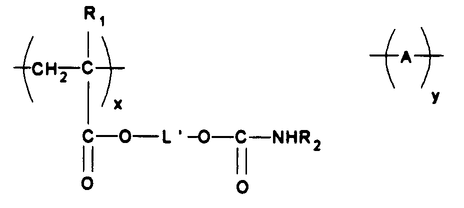

In this formula, R₁, R₂, A, x, and y are as defined above. L' may be a divalent aliphatic linking group, preferably of 1 to 8 carbon atoms, e.g., -(CH₂)-, -(CH₂)₂-, -(CH₂)₄-, and the like, or a divalent cycloaliphatic linking group, preferably up to 8 carbon atoms, e.g., cyclohexyl, and the like. However, other divalent linking groups can be used, depending on the technique used to prepare the polymer. For example, if a hydroxyalkyl carbamate is adducted onto an isocyanate-functional acrylic polymer, the linking group L' would include an -NHCOO-urethane linkage as a residue of the isocyanate group.

The composition of the invention is cured by a reaction of the carbamate-functional polymer (a) with a crosslinker (b) that is a compound having a plurality of functional groups that are reactive with the carbamate groups on component (a). Such reactive groups include active methylol or methylalkoxy groups on aminoplast crosslinking agents or on other compounds such as phenol/formaldehyde adducts, isocyanate groups, siloxane groups, cyclic carbonate groups, and anhydride groups. Examples of (b) compounds include melamine formaldehyde resin (including monomeric or polymeric melamine resin and partially or fully alkylated melamine resin), urea resins (e.g., methylol ureas such as urea formaldehyde resin, alkoxy ureas such as butylated urea formaldehyde resin), polyanhydrides (e.g., polysuccinic anhydride), and polysiloxanes (e.g., trimethoxy siloxane). Aminoplast resin such as melamine formaldehyde resin or urea formaldehyde resin are especially preferred. Even more preferred are aminoplast resins where one or more of the amino nitrogens is substituted with a carbamate group for use in a process with a curing temperature below 150°C, as described in U.S. Patent No. 5,300,328.

The coating composition of the present invention also includes a hydrazide group. The hydrazide group may be attached either to the polymer (a), the polyisocyanate (b), or may be part of a compound different from (a) or (b).

In a preferred embodiment of the invention, the hydrazide group has the formula: 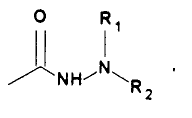 wherein
R₁ and R₂ each independently represents H or substituted or unsubstituted alkyl.

Compounds containing one or more hydrazide groups are well-known in the art. They are described, for example, in C. Clark, Hydrazine, Matheson Chemical Corp., Baltimore, 1953, the disclosure of which is incorporated herein by reference.

In one embodiment, the hydrazide group-containing compound also comprises a hindered amine group as is often found in compounds known as hindered amine light stabilizer compounds (HALS). One example of such a compound has the formula:

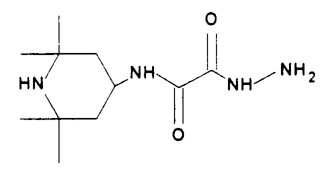

In another embodiment, the hydrazide group-containing compound has the formula: 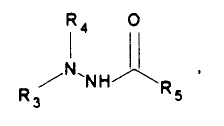 wherein
R₃ and R₄ each independently represents H or substituted or unsubstituted alkyl, and
R₅ represents substituted or unsubstituted alkyl, substituted or unsubstituted aryl, or 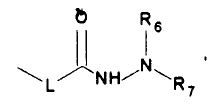 wherein
L represents a divalent linking group, -NH or -O-. The linking group is preferably aliphatic, but may also be aromatic, cycloaliphatic, or heterocyclic. Preferably, at least one of R₃ and R₄, and at least one of R₆ and R₇ represents hydrogen. In another preferred embodiment, all of R₃, R₄, R₅, and R₆ represent hydrogen.

The hydrazide group-containing compounds may be prepared from aliphatic organic acids, such as acetic acid, propionic acid, n-octanoic acid, adipic acid, oxalic acid, sebacic acid, and the like. The acid groups are typically reacted with hydrazine as is known in the art to produce the hydrazide derivative of the acid. A preferred hydrazide group containing compound for purposes of the present invention is adipic dihydrazide.

Examples of useful compounds different from (a) or (b) comprising hydrazide groups include:

| Compound | Formula |
|---|---|
| Hydrazides | R(-CO-NH-NH₂)ₙ |
| Bis-hydrazides | NH₂-NH-CO-NH-NH₂ |
| Semicarbazides | R-NH-CO-NH-NH₂ |
| Thiohydrazides | R(-CS-NH-NH₂)ₙ |
| Thiosemicarbazides | R-NH-CS-NH-NH₂ |

According to the above formulas for hydrazide group-containing compounds, n is a positive integer of at least 1. In a preferred embodiment n=2. R may be hydrogen (except for hydrazides or thiohydrazides when n is 1) or an organic radical. Useful organic radicals include aliphatic, cycloaliphatic, aromatic, or heterocyclic groups, preferably from 1 to 20 carbon atoms. The R groups should be free of substituents that are reactive with hydrazide groups.

Polyhydrazides (e.g., hydrazides or thiohydrazides as shown above where n≥2) can be used to incorporate hydrazide groups onto the polymer (a) or the crosslinking agent (b). This can be accomplished by reacting one of the hydrazide groups with a hydrazide-reactive group on the polymer or with polyisocyanate crosslinker. Hydrazide functionality may also be introduced by reacting hydrazine with a polyisocyanate crosslinker.

The polyhydrazide can be reacted onto polymer (a), by reacting a polyhydrazide with an acrylic or polyester polymer having anhydride or epoxy. Alternatively, hydrazine can be reacted with acid groups on an acrylic polymer to form a hydrazide-functional polymer.

The polyhydrazide can be reacted onto the crosslinking agent (b), where the crosslinker contains groups reactive with hydrazide. Incorporation of the hydrazide group onto the isocyanate crosslinker can be accomplished by first reacting the polyisocyanate with an amount of polyhydrazide that will leave unreacted isocyanate groups, and then capping the remaining unreacted isocyanate groups. This reaction is preferably performed under conditions so that no significant amount of chain extension of the polyisocyanate will occur, e.g., by blocking one or more of the hydrazide groups. Alternatively, this can be accomplished by first partially capping the polyisocyanate, then reacting some or all of the still-active isocyanate groups with a polyhydrazide, and then capping any remaining active isocyanate groups.

In a preferred embodiment the hydrazide dispersion is made and introduced into the coating composition. The hydrazide dispersion is formed from a mixture of acrylic resin, solvent and hydrazide. The hydrazide composition is present in an amount bewteen 0.25 and 5.0% by weight, preferably, between 0.5 and 2.0% by weight, based on total fixed vehicle weight of the coating composition. By fixed vehicle weight is meant the total solids content of the coating composition.

The coating compositions of the present invention may be basecoat or clearcoat compositions. The composition may be in the form of substantially solid powder, a dispersion, or in a substantially liquid state. Liquid coatings may be solvent borne or waterborne. The coatings may also include solvents, pigments, catalysts, hindered amine light stabilizers, ultraviolet light absorbers, rheology control additives and other additives known to one skilled in the art.

Coating compositions can be coated on the article by any of a number of techniques well-known in the art. These include, for example, spray coating, dip coating, roll coating, curtain coating, and the like. For automotive body panels, spray coating is preferred.

After an article is coated with the above-described layers, the composition is subjected to conditions so as to cure the coating layers. Although various methods of curing may be used, heat-curing is preferred. Generally, heat curing is effected by exposing the coated article to elevated temperatures provided primarily by radiative heat sources. Curing temperatures will vary depending on the particular blocking groups used in the cross-linking agents, however they generally range between 93°C and 177°C, and are preferably between 121°C and 141°C. The curing time will vary depending on the particular components used, and physical parameters such as the thickness of the layers, however, typical curing times range from 15 to 60 minutes.

The present invention is illustrated by the following non-limiting examples. All amounts set forth in the following tables are expressed in percent by weight based on total coating composition weight.

### EXAMPLES

### EXAMPLES 1-4

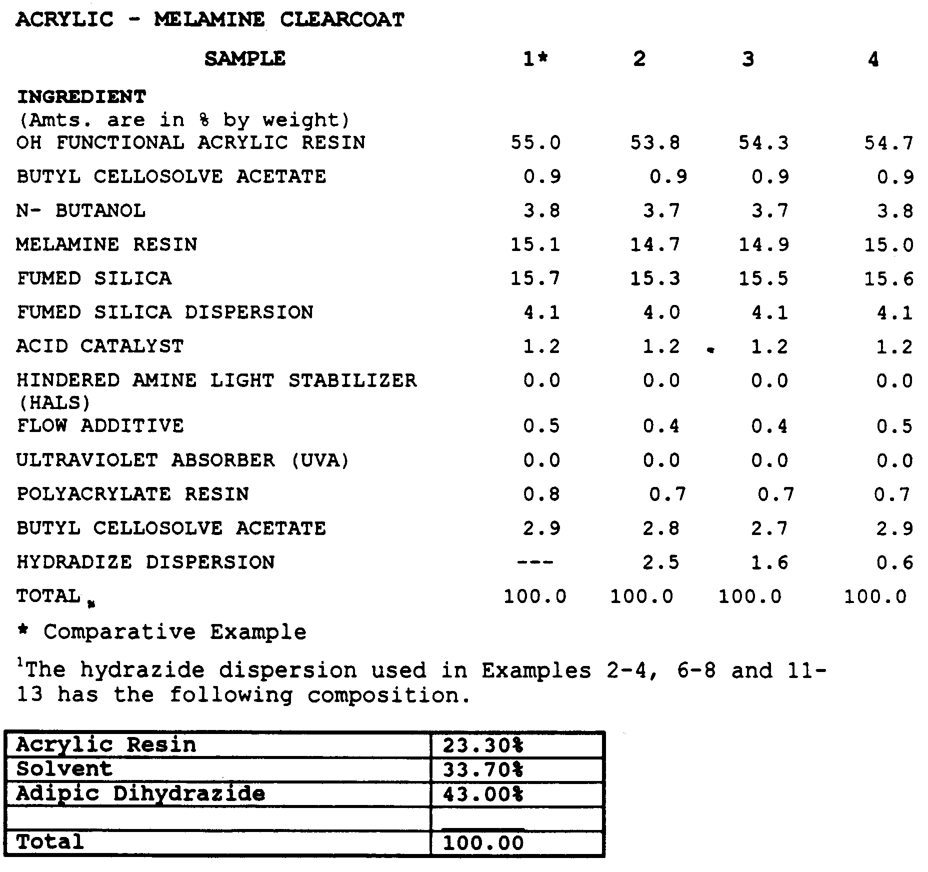

**TABLE 1**

| **ETCH RESULTS EX. 1-4** | | | | |
|---|---|---|---|---|
| **EXAMPLE** | **1** | **2** | **3** | **4** |
| **ETCH RATING** | 10+ | 10+ | 10 | 10+ |

### EXAMPLES 5-8

| **ACRYLIC ISOCYANATE CROSSLINKED CLEARCOAT COMPOSITIONS** | | | | |
|---|---|---|---|---|
| **EXAMPLE** | **5******* | **6** | **7** | **8** |
| **INGREDIENT** (Amts. are in % by weight) | | | | |
| ACRYLIC RESIN | 47.5 | 46.3 | 46.8 | 47.2 |
| POLYISOCYANATE | 24.6 | 24.0 | 24.2 | 24.5 |
| MELAMINE RESIN | 8.2 | 8.0 | 8.0 | 8.1 |
| ISOBUTANOL | 4.2 | 4.1 | 4.2 | 4.2 |
| PROPYL PROPASOL | 3.6 | 3.5 | 3.5 | 3.6 |
| OXOHEXYLACETATE | 7.2 | 7.1 | 7.1 | 7.2 |
| ULTRAVIOLET ABSORBER | 0.0 | 0.0 | 0.0 | 0.0 |
| FLOW ADDITIVE | 0.1 | 0.1 | 0.1 | 0.1 |
| ACRYLIC ADDITIVE | 1.2 | 1.1 | 1.1 | 1.1 |
| HINDERED AMINE LIGHT STABILIZER | 0.0 | 0.0 | 0.0 | 0.0 |
| ISOBUTANOL | 2.2 | 2.1 | 2.2 | 2.2 |
| HEXAHEXYL ACETATE | 1.2 | 1.2 | 1.2 | 1.2 |
| HYDRAZIDE DISPERSION | --- | 2.5 | 1.6 | 0.6 |
| TOTAL | 100.0 | 100.0 | 100.0 | 100.0 |

| | | | | |
|---|---|---|---|---|
| *Example 5 is a comparative example. | | | | |

**Table 2**

| **Etch Results for Examples 5-8** | | | | |
|---|---|---|---|---|
| **EXAMPLE** | **5** | **6** | **7** | **8** |
| **ETCH RESULTS** | 10 | 8 | 9 | 9 |

### EXAMPLES 9-13

| **ACRYLIC CLEARCOAT COMPOSITIONS WITH ISOCYANATE CROSSLINKER** | | | | | |
|---|---|---|---|---|---|
| **EXAMPLE** | **9******* | **10******* | **11** | **12** | **13** |
| **INGREDIENTS (Amounts are in % by weight)** | | | | | |
| ACRYLIC RESIN | 48.9 | 47.1 | 47.4 | 47.5 | 48.1 |
| BUTYL CELLOSOLVE ACETATE | 5.1 | 4.9 | 4.9 | 5.0 | 5.0 |
| DIISOBUTYL KETONE | 2.8 | 2.7 | 2.7 | 2.8 | 2.8 |
| FLOW ADDITIVE | 2.2 | 2.1 | 2.1 | 2.1 | 2.1 |
| ULTRAVIOLET ABSORBER | --- | 1.7 | --- | --- | --- |
| HINDERED AMINE LIGHT STABILIZER | --- | 0.8 | --- | --- | --- |
| N-BUTYL ACETATE | 2.1 | 2.0 | 2.0 | 2.0 | 2.0 |
| BUTYL CARBITOL ACETATE | 5.5 | 5.3 | 5.3 | 5.4 | 5.4 |
| POLYISOCYANATE | 28.7 | 28.7 | 28.6 | 28.9 | 29.2 |
| DIISOBUTYL KETONE | 4.7 | 4.7 | 4.5 | 4.7 | 4.8 |
| DIHYDRAZIDE DISPERSION | ---- | ---- | 2.5 | 1.6 | 0.6 |
| Total | 100.0 | 100.0 | 100.0 | 100.0 | 100.0 |

| | | | | | |
|---|---|---|---|---|---|
| *Examples 9 and 10 are comparative examples. | | | | | |

**Table 3**

| **Etch Results Ex. 9-13** | | | | | |
|---|---|---|---|---|---|
| **EXAMPLE** | **9** | **10** | **11** | **12** | **13** |
| **ETCH RESULTS** | 5 | 6 | 5 | 5 | 5 |

### EXAMPLE 14

| **BASECOAT COMPOSITION******* | | | | |
|---|---|---|---|---|
| **EXAMPLE** | 14A** | 14B | 14C | 14D |
| **INGREDIENT (Amts. are in % by weight)** | | | | |
| MICROGEL CONCENTRATE | 19.5 | 19.3 | 19.1 | 18.9 |
| N-BUTYL ACETATE | 2.0 | 2.0 | 2.0 | 2.0 |
| U.V. ABSORBER SOLUTION | 2.8 | 2.7 | 2.7 | 2.6 |
| MELAMINE RESIN | 15.1 | 15.0 | 14.9 | 14.8 |
| ACRYLATE RESIN | 12.6 | 12.5 | 12.4 | 12.3 |
| METHANOL | 2.2 | 2.2 | 2.2 | 2.2 |
| CELLULOSE ADDITIVE | 5.4 | 5.4 | 5.3 | 5.2 |
| CARBON BLACK PIGMENT DISPERSION | 14.5 | 14.4 | 14.2 | 14.1 |
| BLUE PIGMENT | 0.8 | 0.8 | 0.8 | 0.8 |
| WHITE PIGMENT | 0.2 | 0.2 | 0.2 | 0.2 |
| PIGMENT DISPERSION | 2.5 | 2.4 | 2.4 | 2.4 |
| FUMED SILICA | 5.7 | 5.6 | 5.5 | 5.4 |
| U.V. ABSORBER | 3.7 | 3.7 | 3.7 | 3.7 |
| ACRYLIC RESIN | 2.6 | 2.5 | 2.5 | 2.5 |
| PIGMENT ADDITIVE | 3.8 | 3.7 | 3.7 | 3.7 |
| ACID CATALYST | 1.3 | 1.3 | 1.3 | 1.3 |
| METHANOL | 0.4 | 0.4 | 0.4 | 0.4 |
| N-BUTYL ACETATE | 4.9 | 5.3 | 5.1 | 5.0 |
| HYDRAZIDE DISPERSION | 0.0 | 0.6 | 1.6 | 2.5 |
| Total | 100.0 | 100.0 | 100.0 | 100.0 |

| | | | | |
|---|---|---|---|---|
| *No etch results available. | | | | |
| **14a is a comparative example. | | | | |

### EXAMPLES 15-17

| **CARBAMATE CLEARCOAT COMPOSITIONS** | | | | |
|---|---|---|---|---|
| **EXAMPLE** | **15******* | **16** | **17** | **18** |
| **INGREDIENT (Amts. are in % by weight)** | | | | |
| CARBAMATE FUNCTIONAL ACRYLIC RESIN | 53.9 | 55.8 | 55.1 | 54.4 |
| CARBAMATE ADDITIVE | 7.9 | 8.1 | 8.0 | 8.0 |
| MELAMINE | 7.9 | 8.1 | 8.0 | 8.0 |
| ULTRAVIOLET ABSORBER | 1.7 | 0.0 | 0.0 | 0.0 |
| HINDERED AMINE LIGHT STABILIZER | 0.8 | 0.0 | 0.0 | 0.0 |
| ACID CATALYST | 2.2 | 2.2 | 2.2 | 2.1 |
| RHEOLOGY CONTROL AGENT | 8.4 | 8.2 | 8.2 | 8.1 |
| FLOW ADDITIVE | 0.1 | 0.1 | 0.1 | 0.1 |
| ADHERSION PROMOTER | 0.6 | 0.6 | 0.6 | 0.6 |
| ISOBUTANOL | 2.2 | 2.2 | 2.2 | 2.2 |
| OXYDECYL ACETATE | 3.3 | 3.3 | 3.2 | 3.2 |
| METHYL ISOAMYL KETONE | 5.5 | 5.4 | 5.4 | 5.4 |
| OXYOCTYL ACETATE | 5.5 | 5.4 | 5.4 | 5.4 |
| HYDRAZIDE DISPERSION | 0 | 0.6 | 1.6 | 2.5 |
| TOTAL | 100.0 | 100.0 | 100.0 | 100.0 |

| | | | | |
|---|---|---|---|---|
| *Comparative Example | | | | |

**TABLE 4**

| **Etch Results Ex. 15-18** | | | | |
|---|---|---|---|---|
| **EXAMPLE** | **15** | **16** | **17** | **18** |
| ETCH RESULTS | 5 | 4 | 5 | 4 |

## Claims

1. A coating composition comprising
a) a polymer selected from the group consisting of acrylic, modified acrylic, polyurethane, polyester, polycarbonate, polyamides, polyimides, polysiloxanes, epoxy and carbamate polymers and mixtures thereof, having functionality reactive toward a crosslinking agent,
b) a crosslinking agent selected from the group consisting of polyisocyanates, aminoplasts, carbamates and mixtures thereof,
c) a hyrdrazide on a), b) or part of a compound different from a) or b), present in an amount between 0.25 and 5.0% by weight, based on total fixed vehicle weight.

2. A coating composition as defined in claim 1, wherein the reactive functionality of a) is selected from the group consisting of hydroxy, epoxy, carboxy, carbamate, amino, hydrazide and thiol functionalities.

3. A coating composition as defined in claim 1, wherein the composition is a basecoat composition.

4. A coating composition as defined in claim 1, wherein the composition is a clearcoat composition.

5. A coating composition as defined in claim 3, wherein the reactive functionality on the polymer a) is selected from the group consisting of hydroxy and amino functionalities and the crosslinking agent b) is melamine.

6. A coating composition as defined in claim 4, wherein the reactive functionality on the polymer a) is hydroxy functional and the crosslinking agent b) is melamine.

7. A coating composition as defined in claim 3, wherein the reactive functionality on the polymer a) is hydroxy functional and the crosslinking agent b) is a polyisocyanate.

8. A coating composition as defined in claim 4, wherein the reactive functionality on the polymer a) is hydroxy functional and the crosslinking agent b) is a polyisocyanate.

9. A coating composition as defined in claim 3, wherein the polymer a) is hydroxy functional and the crosslinking agent b) is a polyisocyanate reacted with a compound selected from the group consisting of dialkyl malonates, acetoacetates and mixtures thereof.

10. A coating composition as defined in claim 4, wherein the polymer a) is hydroxy functional and the crosslinking agent b) is a polyisocyanate reacted with a compound selected from the group consisting of dialkyl malonates, acetoacetates and mixtures thereof.

11. A coating composition as defined in claim 3, wherein the polymer a) is a carbamate functional polymer and the crosslinker b) is an aminoplast crosslinker.

12. A coating composition as defined in claim 3, wherein the polymer a) is a carbamate functional polymer and the crosslinker b) is an aminoplast crosslinker.

13. A color-plus-clear composite coating comprising a basecoat composition, overcoated with a clearcoat composition, wherein the clearcoat composition is as defined in claim 1.

14. A color-plus-clear composite coating comprising a basecoat composition, overcoated with a clearcoat composition, wherein the basecoat composition is as defined in claim 1.

15. A coating composition as defined in claim 1, wherein the hydrazide has the formula 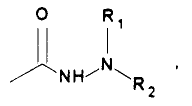 wherein
and R₁ and R₂ each individually represent H, or substituted or unsubstituted alkyl groups.

16. A coating composition as defined in claim 1, wherein at least one of R₁ and R₂ is H.

17. A coating composition as defined in claim 1, wherein both R₁ and R₂ are hydrogen.

18. A coating composition as defined in claim 1, wherein the hydrazide component is a functionality on the polymer a).

19. A coating composition as defined in claim 1, wherein the hydrazide component is a functionality on the crosslinking agent b).

20. A coating composition as defined in claim 1, wherein the hydrazide component is part of a compound different from a) or b).

21. A coating composition as defined in claim 1, wherein the hydrazide is an aliphatic acid hydrazide compound.

22. A coating composition as defined in claim 1, wherein the hydrazide has the formula 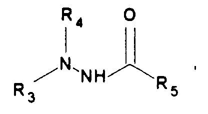 wherein
where R3 and R4 each independently represent groups selected from the group consisting of H, substituted alkyl and unsubstituted alkyl groups, R5 represents a substituted or unsubstituted alkyl group.

23. A coating composition as defined in claim 1, wherein the hydrazide has the formula 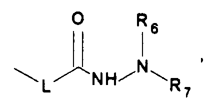 wherein
L is a divalent linking group, -NH or -O-, and at least one of R6 and R7 represent H, with the other being substituted with a functionality selected from the group consisting of H, substituted alkyl and unsubstituted alkyl groups, and substituted and unsubstituted aryl groups.

24. A method for improving resistance of a cured coating to environmental degradation, comprising the steps of applying to a substrate, a basecoat composition to form a basecoat layer, subsequently applying a clearcoat composition including
a) a polymer selected from the group consisting of acrylic, polyurethane, polyester, polycarbonate, polyamide, polyimide, polysiloxane, epoxy, and carbamate polymers and mixtures thereof, having functionality reactive toward a crosslinking agent,
b) a crosslinking agent selected from the group consisting of polyisocyanates, aminoplasts, carbamates and mixtures thereof,
c) a hyrdrazide on a), b) or part of a compound different from a) or b), present in an amount between 0.25 and 5.0% by weight, based on total fixed vehicle weight,
to form a clearcoat layer and curing the layers either sequentially or simultaneously to form a cured film.
